# EUROPÄISCHE PATENTANMELDUNG

(11) **EP 3 269 281 A1**
(43) Veröffentlichungstag der Anmeldung: **17.01.2018**
(21) Anmeldenummer: 17001179.5
(22) Anmeldetag: 11.07.2017
(51) Int. Cl.: A47J 43/14, A23J 1/09

(54) **EIERTRENNVORRICHTUNG**

(30) Priorität: 11.07.2016 DE 102016008323
(71) Anmelder: Molin Pradel, Luca, 52159 Roetgen (DE)
(72) Erfinder: Molin Pradel, Luca, 52159 Roetgen (DE)
(74) Vertreter: Castell, Klaus

(57) **Zusammenfassung**

Eine Eiertrennvornchtung zum Trennen von Eiweiß und Eigelb weist einen geneigten Rost mit mehreren parallel zueinander angeordneten Trennstreben auf, der in einer Trennrostaufnahme angeordnet ist. Dies erleichtert es, aufgeschlagene Eier vom Eigelb zu trennen, indem das Eiweiß aufgrund dessen geringerer Viskosität durch die Trennroststreben hindurch tropfen kann, und das Eigelb auf den Trennroststreben entlang gleitet.

## Beschreibung

Die Erfindung betrifft eine Eiertrennvorrichtung zum Trennen von Eiweiß und Eigelb, die einen geneigten Trennrost mit mehreren parallel zueinander angeordneten Trennroststreben aufweist, wobei das Eiweiß aufgrund dessen geringerer Viskosität durch die Trennroststreben hindurch tropfen kann und das Eigelb auf den Trennroststreben entlang gleiten kann.

Eine derartige Eiertrennvorrichtung ist beispielsweise aus der DE 20 2012 103 970 U1 bekannt. Ein speziell gebogener Rost hat zwei Neigungen, um auf dem Rost entlang gleitende Eidotter vom Eiweiß zu trennen, das durch den Rost hindurch fließen kann.

Der Erfindung liegt die Aufgabe zugrunde, eine derartige Eiertrennvorrichtung weiterzuentwickeln.

Diese Aufgabe wird dadurch gelöst, dass der Trennrost in einer Trennrostaufnahme angeordnet ist.

Das Anordnen des Trennrostes in einer Trennrostaufnahme ermöglicht es, den Trennrost getrennt von den übrigen Teilen der Eiertrennvorrichtung präzise herzustellen und die Trennrostaufnahme beispielsweise als abgekantetes Blechteil vorzusehen. Trennrost und Trennrostaufnahme können auch aus verschiedenen Materialien hergestellt werden. So kann die Trennrostaufnahme beispielsweise aus einem dünnen, mit einem Laser geschnittenen oder gestanzten Blech hergestellt werden, während der Trennrost aus Stäben geschweißt wird. Für die Trennrostaufnahme kann ein Blech aus V2A-Material verwendet werden, während der Trennrost aus V4A-Material oder auch aus einem Kunststoff hergestellt werden kann.

Außerdem kann der Trennrost auf einen Bereich der Eiertrennvorrichtung beschränkt werden, in dem eine Trennung von Eigelb und Eiweiß vorgesehen wird. Genau in diesem von der Trennrostaufnahme umgrenzten Bereich des Trennrostes tropft somit Eiweiß durch den Trennrost und nur in diesem Bereich muss unterhalb des Trennrostes das Eiweiß aufgenommen werden.

Das Anordnen des Trennrostes in einer Trennrostaufnahme erleichtert auch das Reinigen der Eiertrennvorrichtung, da der Trennrost, der erfindungsgemäß auf den Bereich der Trennrostaufnahme beschränkt ist, somit einfacher zu reinigen ist.

Vorteilhaft ist es, wenn der Trennrost lösbar in der Trennrostaufnahme angeordnet ist. Dies ermöglicht es, den Trennrost für die Reinigung aus der Trennrostaufnahme herauszunehmen. In der Trennrostaufnahme können unterschiedliche oder gleiche Trennroste hintereinander angeordnet werden und es können auch unterschiedliche auf die Konsistenz der Eier genau abgestimmte Trennroste verwendet werden.

Je nach dem Alter und der Herkunft der Eier löst sich das Eiweiß leichter oder besser vom Eigelb. Außerdem ändert sich die Struktur des Eigelbs während der Lagerung der Eier. Dies führt dazu, dass bei frischen Eiern ein größerer Abstand zwischen den Streben des Trennrostes vorgesehen werden kann, um eine schnelle Trennung von Eigelb und Eiweiß zu ermöglichen, während für ältere Eier eher ein geringerer Abstand zwischen den Streben vorteilhaft ist, um sicherzustellen, dass kein Eigelb durch die Streben hindurch zum Eiweiß gelangt.

Vorzugsweise sollte der Abstand zwischen den Trennroststreben kleiner als 5 mm sein. Dabei können die Trennroststreben mit einem rechteckigen oder einem quadratischen Schnitt oder auch mit einem runden oder ovalen Querschnitt ausgebildet sein, um eine schnelle Trennung von Eigelb und Eiweiß zu ermöglichen, ohne dass Eigelb durch den Trennrost hindurch fließen kann.

Die erfindungsgemäße Eiertrennvorrichtung ermöglicht es somit, aus unterschiedlichen Trennrosten den optimalen Trennrost auszuwählen und auch einen verschmutzten Trennrost durch einen identischen sauberen Trennrost zu ersetzen, ohne die gesamte Eiertrennvorrichtung zu reinigen.

Weiterbildend wird vorgeschlagen, dass die Eiertrennvorrichtung ein höhenverstellbares Gestell aufweist, auf dem die Trennrostaufnahme angeordnet ist. Dies erlaubt es, auf einfache Art und Weise die Neigung des Trennrostes zu verändern. Nicht nur der Abstand der Trennroststreben zueinander, sondern auch die Neigung der Trennroststreben ist für einen schnellen Trennprozess verantwortlich. Daher ist es vorteilhaft, wenn mit der erfindungsgemäßen Trennvorrichtung der Trennroststrebenabstand und die Neigung des Trennrostes verstellbar sind. Dies ermöglicht es, für jeden Einsatzzweck und unterschiedliche Eiqualitäten die Eiertrennvorrichtung so einzustellen, dass ein optimales Trennergebnis erreicht wird.

Eine bevorzugte Ausführungsform sieht vor, dass an der höheren Seite der Trennrostaufnahme ein senkrechter Keil angeordnet ist. Dies ermöglicht es, an diesem Keil ein Ei aufzuschlagen, während im Bereich des Keils Eiweiß und Eigelb auf der Trennrostaufnahme und dem Trennrost entlang gleiten können.

Ein einfaches, schnelles und effektives Arbeiten wird vor allem dann erreicht, wenn der senkrechte Keil mindestens 10 cm zum Trennrost beabstandet angeordnet ist. Dies führt dazu, dass Eigelb und Eiweiß zunächst auf einem Bereich außerhalb des Trennrostes abgelegt werden können, um von dort langsam zum Trennrost zu fließen, wo sich das Eiweiß vom Eigelb trennt.

Eine kompakte Vorrichtung wird dadurch erzielt, dass unter dem Trennrost eine Wanne angeordnet ist, die mindestens zwei Halterungen für eine Verbindung zur Trennrostaufnahme aufweist. Dies ermöglicht es, genau unterhalb des Trennrostes das Eiweiß in der Wanne aufzunehmen und die Wanne als stabile Basis für den Trennrost und die Trennrostaufnahme zu verwenden. Somit bildet die Wanne einen stabilen Sockel der Eiertrennvorrichtung, auf dem der Rost und die Trennrostaufnahme vorzugsweise lösbar von der Wanne angeordnet sind. Dies ermöglicht es, die Wanne getrennt von der Trennrostaufnahme und dem Trennrost zu transportieren und zu reinigen. Dadurch kann die gesamte Eiertrennvorrichtung auch in üblichen gewerblichen Spülmaschinen auf einfache Art und Weise schnell gereinigt werden.

Sofern unter dem Trennrost eine Wanne vorgesehen ist, ist es vorteilhaft, wenn die Wanne in Längserstreckung der Trennrostaufnahme kürzer ist als die Trennrostaufnahme. Das heißt die Trennrostaufnahme ist länger als die Wanne. Dies ermöglicht es, auf der einen Seite der Trennrostaufnahme einen Eieraufschlagbereich und auf der anderen Seite der Trennrostaufnahme einen Eigelbabflussbereich vorzusehen, der es ermöglicht, das Eigelb nehmen der Wanne in einem separaten Behälter aufzufangen.

Eine einfache Herstellung der Wanne und eine optimale Positionierung unter der Trennrostaufnahme werden dadurch erzielt, dass die Wanne rechteckig ausgebildet ist.

Um das Abfließen der vom Eiweiß getrennten Eidotter zu erleichtern, ohne die Trennung im Bereich des Trennrostes zu beeinflussen, wird vorgeschlagen, dass die Trennrostaufnahme an der tieferen Seite des Trennrostes eine Schütte aufweist, deren Neigung relativ zur Neigung des Trennrostes verstellbar ist. Die Schütte ermöglicht es auch, das Eigelb in einen Behälter fließen zu lassen.

Um ein Wegfließen vom Eiweiß oder Eigelb zu vermeiden, wird vorgeschlagen, dass die Trennrostaufnahme eine U-förmige Umrandung aufweist. Diese Umrandung kann auch auf einfache Art und Weise durch Abkantung eines Bleches hergestellt werden, das als Trennrostaufnahme dient.

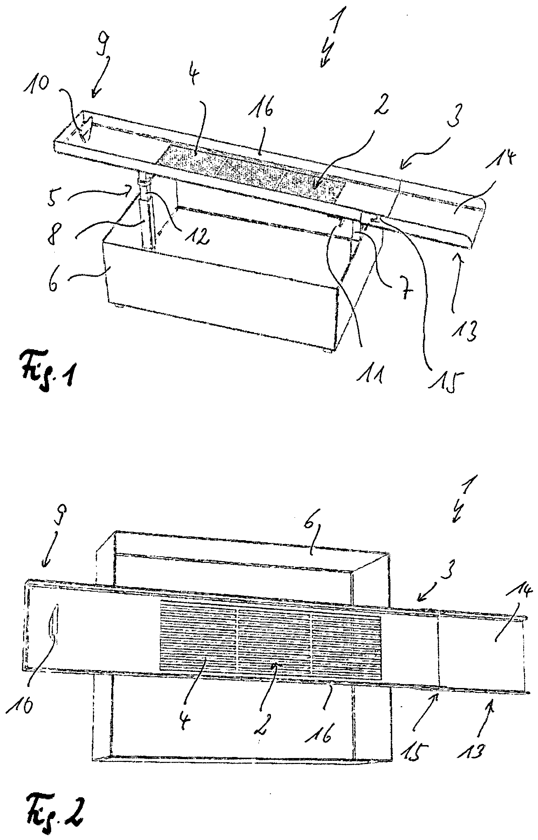

Eine besonders vorteilhafte Ausführungsform einer Eiertrennvorrichtung ist in der Zeichnung dargestellt und wird im Folgenden näher beschrieben. Es zeigen die
- Figur 1: perspektivisch eine Seitenansicht der Eiertrennvorrichtung und die
- Figur 2: perspektivisch eine Draufansicht auf die Eiertrennvorrichtung.

Die in den Figuren gezeigte Eiertrennvorrichtung besteht im Wesentlichen aus dem Trennrost 2, der in die Trennrostaufnahme 3 eingesetzt ist. Der Trennrost 2 hat eine Vielzahl an parallel in Längsrichtung der Trennrostaufnahme verlaufenden Trennroststreben 4, die in einem Abstand von 3 bis 4 mm zueinander angeordnet sind.

Die Trennrostaufnahme 3 ist über ein höhenverstellbares Gestell 5 an einer Wanne 6 befestigt, indem ein Vierkantrohr 7 unterschiedlich weit in ein an der Wanne befestigtes etwas größeres Vierkantrohr 8 eingeschoben wird.

An der höheren Seite 9 der Trennrostaufnahme 3 ist an der Trennrostaufnahme 3 ein Keil 10 angeordnet, an dem ein Ei aufgeschlagen werden kann.

An der Unterseite der Trennrostaufnahme 3 ist ein L-Profil 11 als Eiweißabstreifblech angeordnet, um dafür zu sorgen, dass das gesamte durch den Trennrost 2 fließende Eiweiß in die Wanne 6 gelangt.

Das Vierkantrohr 7 und gegenüberliegend ein weiteres Vierkantrohr 12 dienen als Halterungen für die Verbindung zwischen der Trennrostaufnahme 3 und der Wanne 6.

Der höheren Seite 9 gegenüberliegend liegt die niedrigere Seite 13 der Trennrostaufnahme 3, an der eine Schütte 14 vorgesehen ist. Diese Schütte 14 kann die gleiche Neigung wie der Trennrost 2 aufweisen oder mit dem Scharnier 15 leicht nach unten gekippt werden, um das Abfließen des Eigelbes zu beschleunigen.

Die äußere Begrenzung der Trennrostaufnahme 3 bildet eine U-förmige Umrahmung 16.

## Patentansprüche

1. Eiertrennvorrichtung (1) zum Trennen von Eiweiß und Eigelb, die einen geneigten Trennrost (2) mit mehreren parallel zueinander angeordneten Trennroststreben (4) aufweist, wobei das Eiweiß aufgrund dessen geringerer Viskosität durch die Trennroststreben (4) hindurchtropfen kann und das Eigelb auf den Trennroststreben (4) entlang gleiten kann, ***dadurch gekennzeichnet, dass*** der Trennrost (2) in einer Trennrostaufnahme (3) angeordnet ist.

2. Eiertrennvorrichtung nach Anspruch 1, ***dadurch gekennzeichnet, dass*** der Trennrost (2) lösbar in der Trennrostaufnahme (3) angeordnet ist, um unterschiedliche Trennroste (2) in der Trennrostaufnahme (3) anordnen zu können.

3. Eiertrennvorrichtung nach einem der vorhergehenden Ansprüche, ***dadurch gekennzeichnet, dass*** die Trennrostaufnahme (3) auf einem höhenverstellbaren Gestell (5) angeordnet ist, um die Neigung des Trennrostes (2) zu verändern.

4. Eiertrennvorrichtung nach einem der vorhergehenden Ansprüche, ***dadurch gekennzeichnet, dass*** an der höheren Seite (9) der Trennrostaufnahme (3) ein senkrechter Keil (10) angeordnet ist, um ein Ei daran aufschlagen zu können.

5. Eiertrennvorrichtung nach Anspruch 4, ***dadurch gekennzeichnet, dass*** der senkrechte Keil (10) mindestens 10 cm zum Trennrost (2) beabstandet angeordnet ist.

6. Eiertrennvorrichtung nach einem der vorhergehenden Ansprüche, ***dadurch gekennzeichnet, dass*** unter dem Trennrost (2) eine Wanne (6) angeordnet ist, die mindestens zwei Halterungen (7, 12) für eine Verbindung zur Trennrostaufnahme (3) aufweist.

7. Eiertrennvorrichtung nach Anspruch 6, ***dadurch gekennzeichnet, dass*** die Wanne (6) in Längserstreckung des Trennrostes (2) kürzer ist als die Trennrostaufnahme (3).

8. Eiertrennvorrichtung nach Anspruch 6 oder 7, ***dadurch gekennzeichnet, dass*** die Wanne (6) rechteckig ist.

9. Eiertrennvorrichtung nach einem der vorhergehenden Ansprüche, ***dadurch gekennzeichnet, dass*** die Trennrostaufnahme (3) an der tieferen Seite (13) des Trennrostes (2) eine Schütte (14) aufweist, deren Neigung relativ zur Neigung des Trennrostes (2) verstellbar ist.

10. Eiertrennvorrichtung nach einem der vorhergehenden Ansprüche, ***dadurch gekennzeichnet, dass*** die Trennrostaufnahme (3) eine U-förmige Umrandung (16) aufweist.
